# EUROPÄISCHE PATENTSCHRIFT

(11) **EP 3 851 713 B1**
(45) Veröffentlichungstag und Bekanntmachung des Hinweises auf die Patenterteilung: **26.02.2025**
(21) Anmeldenummer: 21152001.0
(22) Anmeldetag: 18.01.2021
(51) Int. Cl.: F16K 7/12, F16K 37/00

(54) **SYSTEM ZUR ZUSTANDSUEBERWACHUNG**
SYSTEM FOR CONDITION MONITORING
SYSTÈME DE SURVEILLANCE DE L'ÉTAT

(30) Priorität: 20.01.2020 DE 102020101178
(43) Veröffentlichungstag der Anmeldung: 21.07.2021
(73) Patentinhaber: SISTO Armaturen S.A., 6468 Echternach (LU)
(72) Erfinder: SCHAAL, Andreas, 6468 Echternach (LU)
(74) Vertreter: Busch, Tobias

(56) Entgegenhaltungen:
- EP-A1- 0 637 713
- EP-A1- 3 030 818
- EP-A1- 3 263 963
- EP-A2- 1 726 855
- WO-A1-2020/012828
- DE-A1- 102015 219 273
- US-A1- 2005 092 079

## Beschreibung

Die Erfindung betrifft ein System zur Zustandsüberwachung von Membranventilen und deren Pneumatikeinrichtung.

Membranventile können zur Dosierung von unterschiedlichen Fluiden eingesetzt werden, beispielsweise von Gasen, Dämpfen oder Flüssigkeiten. Beispielgebend können Membranventile eingesetzt werden, um hochviskose bzw. sehr stark haftfähige Medien zu dosieren bzw. zu verteilen. Bei Membranventilen wird dabei wirksam eine Ablagerung und somit auch eine Kontamination verhindert. Ventile auf Basis des Membranprinzips sind die totraumärmsten Dosierarmaturen. Neben dem sehr geringen Totraumvolumen sind Membranventile zudem entleerungsoptimiert konstruiert, sodass eine rückstandsfreie Entfernung des Mediums ermöglicht wird.

Dies ist insbesondere bei pharmazeutischen Anlagen und Fertigungsprozessen von großer Bedeutung, da diese den hohen Ansprüchen einer strengen Validierung unterliegen, mit dem Ziel, eine gleichbleibende und reproduzierbare Qualität zu gewährleisten. Aus diesen Ansprüchen resultiert die Notwendigkeit, verschiedene Prozesse innerhalb einer Anlage fahren zu können. Neben dem eigentlichen Produktionsprozess sind dies in der Regel die Reinigung, Desinfektion und Sterilisation der Anlage. Membranventile haben sich aufgrund ihrer vorteilhaften Konstruktionsmerkmale als bevorzugte Armatur in der sterilen Prozesstechnik etabliert.

Die eingesetzten Membranen bilden bewegliche, dichtende Wände, die zwei Räume mit in der Regel unterschiedlichen Medien (Gase, Flüssigkeiten) und häufig auch unterschiedlichen Druckverhältnissen voneinander trennen.

Ein wichtiges Qualitätsmerkmal einer Membran ist deren Beweglichkeit, das heißt die Fähigkeit senkrecht zur Einspannfläche (Membranfläche) einen Hub auszuführen, der mechanisch angetrieben bedingt sein kann. Weiterhin ist die Beständigkeit der Membran von Bedeutung, insbesondere wenn aggressive Medien gefördert werden.

Die Bewegungsfähigkeit und Beständigkeit einer Membran hängen im Wesentlichen vom Werkstoff ab, aus dem die Membran besteht. Als Grundwerkstoffe für Membranen werden hauptsächlich Elastomere verwendet, die zur Erzielung einer höheren Festigkeit mit Gewebeeinlagen verstärkt werden können. Als Elastomere haben sich Membranen mit Ethylen-Propylen-Dien-Kautschuk (EPDM) bewährt. Bei Ethylen-Propylen-Dien-Kautschuk (EPDM) handelt es sich um terpolymere Elastomere (Gummi) und somit um synthetische Kautschuke. Das Material zeichnet sich durch eine hohe Elastizität und gute chemische Beständigkeit aus.

Die genannten Membranventile werden häufig mit entsprechenden pneumatischen Stelleinrichtungen angetrieben. In diesen wird ein Stellglied bewegt, indem ein druckbehaftetes Medium, insbesondere Druckluft bzw. Steuerluft, zu oder abgeführt wird. Die Versorgung einer derartigen Pneumatikeinrichtung mit Druckluft erfolgt über sogenannte Steuerluftanschlüsse.

Druckluft ist in der Prozesstechnik ein einfacher Energieträger, der sich vielseitig im Bereich der mechanischen Steuerung einsetzen lässt. Die Qualität der Druckluft ist ebenso ein wesentlicher Faktor wie die Dichtheit eines Systems.

Vorzugsweise weist das System einen Sensor zur Ermittlung der Qualität der Steuerluft auf. Dabei kann die Steuerluft beispielsweise bezüglich der Anwesenheit anderer Gase, insbesondere zur Einschätzung einer Explosionsgefährdung überwacht werden.

Die Pneumatikeinrichtungen werden gerne in explosionsgefährdeten Bereichen eingesetzt. Da ist es wichtig, dass bei Leckagen keine störenden und gefährlichen Stoffe austreten. Oft führt der Einsatz von Druckluft zu einem nachlässigen Umgang mit Leckagen, was wiederum zu einem erheblichen Energieverbrauch in Anlagen führen kann. Eine Zustandsüberwachung sollte also ganzheitlich angelegt sein und sowohl das Membranventil als auch dessen Antrieb überwachen.

Grundlage für eine Zustandsüberwachung ist das Sammeln verschiedener Zustandsdaten, die von Sensoren am Membranventil und/oder an der Pneumatikeinrichtung abgegriffen werden. Diese Daten müssen dann an ein übergeordnetes Überwachungssystem weitergeleitet werden. Auf Basis von intelligenten Algorithmen kann in einem Überwachungssystem der Zustand analysiert werden.

Die EP 2 984 533 B1 beschreibt den Einsatz von Sensoren an einem Membranventil zu Ermittlung des Betriebszustandes und ein Verfahren zu dessen Auswertung. Damit kann eine Aussage hinsichtlich des Stellzustandes getroffen werden. Dies ist ein erster Schritt zu einer Zustandsüberwachung. Mit einem solchen System lässt sich jedoch noch keine Aussage über den störungs- und leckagefreien Zustand eines Membranventils inklusive dessen Pneumatikeinrichtung treffen.

In der DE 10 2014 205 117 A1 ist die Einbringung einer elektronischen Schaltung in die Membrane beschrieben. Dabei handelt es sich vorzugsweise um eine Antenne, die durch leitfähige Partikel auf einer Elastomerlage ausgebildet wird. Hierüber lassen sich Betriebs- und Schaltzustände ermitteln, jedoch kann die Lebensdauer durch die veränderte Membrancharakteristik verkürzt sein. Auch hinsichtlich einer ganzheitlichen Zustandsüberwachung bietet dieses System lediglich eine erste Information.

In der Patentanmeldung DE 10 2015 210 208 A1 wird ein Verfahren zum Ermitteln einer Zustandsgröße einer Ventilmembran eines elektronisch gesteuerten und motorisch angetriebenen Membranventils, sowie Membranventilsystem beschrieben. Bei der Zustandsgröße handelt es sich um die Membrandicke, die eine Aussage über den Verschleißzustand der Membran geben kann. Diese soll ermittelt werden, indem bei einer durch Kraftregelung konstanten Antriebskraft eine veränderte Membrandicke durch eine veränderte Position der Kolbenstange messbar wird. Außerdem soll eine Analyse der Schließgeschwindigkeit zur Identifizierung des Membranzustands herangezogen werden. Eine Zustandsüberwachungseinheit für pneumatisch angetriebene Membranventile ist nicht beschrieben. Das System ist zudem nicht einfach nachrüstbar, da die komplette Antriebseinrichtung getauscht werden müsste und bietet keine ganzheitliche Zustandsüberwachung.

Die DE 10 2015 210 210 A1 beschreibt ein Verfahren zur Diagnose eines Membranventils, sowie Diagnosesystem für ein Membranventil, das zunächst je eine Größe für die Membrane, das Ventil und den Betrieb des Ventils ermittelt und aus diesen Größen mittels eines Algorithmus eine Zustandsgröße für den Verschleiß (Restlebensdauer) bestimmt. Bei den Eingabegrößen kann es sich um statische Daten handeln, die auf einem lokalen Speicher oder in der Cloud gespeichert sind. Jedoch wird mindestens eine Größe von einem am Ventil positionierten Sensor geliefert. Das System kann nur durch eine komplizierte Nachrüstung bei schon installierten Membranventilen implementiert werden und liefert ausschließlich Zustandsvorhersagen bezüglich der Membran, nicht bezüglich des Membranventils und dessen Pneumatikeinrichtung.

Die DE 10 2015 219 273 A1 beschreibt eine Membraneinrichtung mit einem gestaltfest ausgebildeten Membrangehäuse, das von einem Arbeitskanal durchsetzt ist, der sich zwischen einer Eingangsmündung und einer Ausgangsmündung erstreckt, wobei in dem Arbeitskanal eine flexible Membran aufgenommen ist, die abdichtend mit dem Membrangehäuse verbunden ist und mit dem Membrangehäuse einen größenvariablen Arbeitsraum begrenzt. Es ist vorgesehen, dass dem Membrangehäuse ein Ansteuermittel zugeordnet ist, das für eine Einleitung einer Membranbewegung auf die Membran ausgebildet ist, um eine Querschnittsveränderung des zumindest bereichsweise von der Membran begrenzten Arbeitskanals zu ermöglichen.

Die EP 3 263 963 A1 offenbart ein Fluidregelventil, welches umfasst einen Ventilhauptkörper und einen Schwingungssensor. Der Ventilhauptkörper hat einen Betätigungsabschnitt und einen Ventilabschnitt. Der Sensor erfasst die im Ventilhauptkörper erzeugte Vibration. Das Fluidsteuerventil umfasst ferner einen Controller, um ein Programm zur Bestimmung von Anomalien auszuführen und den Ventilhauptkörper als normal zu bestimmen, wenn der Sensor die Vibration mit einer Amplitude erfasst, die den vorbestimmten Schwellenwert überschreitet, während der Ventilhauptkörper als anormal bestimmt wird, wenn der Sensor die Vibration mit einer Amplitude, die den vorbestimmten Schwellenwert überschreitet, nicht erfasst.

Die WO 2020/012828 A1 beschreibt eine Flüssigkeitssteuerungsvorrichtung, mit der Daten, die sich auf die inneren Vorgänge der Vorrichtung beziehen, erfasst werden können. Eine Fluidsteuervorrichtung hat einen Haubenteil, an dem Sensoren zum Erfassen von Vorgängen innerhalb der Fluidsteuerung angebracht sind, und der Ventilkörper ist mit einem ausgesparten Teil zur Anpassung an den Haubenteil versehen, und einen Schlitz, der es ermöglicht, ein mit den Sensoren verbundenes Kommunikationskabel zur Außenseite herauszuführen, von dem ein Ende auf der Seite offen ist, die einem Basisteil gegenüberliegt, in dem ein Strömungskanal ausgebildet ist, und das von der Außenseite zur Seite des vertieften Teils hindurchgeht.

Die EP 1 726 855 A2 offenbart ein Futtermittelventil mit integriertem Lecksensor zur Verwendung in Verbindung mit automatischen Fütterungsanlagen im landwirtschaftlichen Bereich. Das neue Merkmal besteht darin, dass das Ventil eine Sensoreinheit zur Erkennung eines Lecks in der Membran des Ventils enthält.

Die US 2005/009079 A1 beschreibt eine Erfassung der Membranposition und der Bewegung von Membranventilen mit einem oder mehreren Sensoren, die direkt an der Membran angeordnet sind oder die Membran selbst und nicht einen zugehörigen Teil eines Ventils erfassen. Die Offenbarung sieht viele verschiedene Arten von Sensoren und auch eine Temperaturkompensation vor.

Die EP 0 637 713 A1 offenbart ein Diagnosesystem für Regel- und Absperrventile und benutzt den Prozessor eines intelligenten Stellungsreglers als digitalen Signalprozessor, der an den Betrieb des Ventils überwachende bzw. Betriebsgrößen des Ventils messende Sensoren angeschlossen ist und bei Abweichung der gemessenen Werte von zuvor bei einwandfreiem Betrieb des Ventils aufgenommenen Vergleichsmesswerten ein Alarmsignal gibt.

Die WO 2015/020986 A1 zeigt eine Prozesssteuerungsvorrichtung. Die Prozesssteuerungsvorrichtung umfasst ein Prozesssteuerventil, ein Stellglied, eine digitale Ventilsteuerung und einen Prozessor. Das Stellglied ist mit dem Prozesssteuerventil verbunden und so konfiguriert, dass es eine Position des Prozesssteuerventils steuert.

Aufgabe der Erfindung ist es, ein System zur Zustandsüberwachung eines Membranventils bereitzustellen, welches zuverlässig mindestens eine Zustandsgröße eines Membranventils und dessen Pneumatikeinrichtung ermittelt. Die Ermittlung soll während des regulären Betriebes erfolgen können. Dabei soll das System sowohl eine Information über den Zustand des Membranventils und der Pneumatikeinrichtung geben als auch Handlungsbedarf anzeigen können. Das System soll einfach an bestehenden Membranventilen und deren Pneumatikeinrichtung, insbesondere ohne Demontage, nachgerüstet werden können, ohne den laufenden Betrieb unterbrechen zu müssen. Dabei soll das System verkabelungsfrei betrieben werden können und keinen zusätzlichen Wartungsaufwand erzeugen. Die Membran und deren Betrieb soll nicht nachteilig beeinträchtigt werden. Das System soll möglichst problem- sowie unterbrechungsfrei laufen und soll sich auf möglichst preiswerte sowie besonders einfache Weise herstellen lassen.

Diese Aufgabe wird erfindungsgemäß durch ein System zur Zustandsüberwachung gemäß den Ansprüchen gelöst. Bevorzugte Varianten sind den Unteransprüchen, der Beschreibung und den Zeichnungen zu entnehmen.

Gemäß der Erfindung ist ein System zur Zustandsüberwachung von Membranventilen und deren Pneumatikeinrichtung, wobei das System mit einer Schnittstelle mit der Pneumatikeinrichtung verbindbar ist und mit einer weiteren Schnittstelle an die Steuerluft angeschlossen werden kann, wobei das System zur Zustandsüberwachung zwei pneumatische Anschlüsse, einen Versorgungsanschluss und einen Verbraucheranschluss besitzt und wobei das System zur Zustandsüberwachung am Verbraucheranschluss ein Außengewinde besitzt, das direkt in einen pneumatischen Antrieb eingeschraubt werden kann, dazu ausgebildet, mindestens zwei der folgenden Schritte durchzuführen: Ermittlung eines Betriebsdrucks, Ermittlung eines Steuerdrucks, Ermittlung von wirkenden Kräften in einer Antriebsachse des Ventils, Ermittlung eines Schwingungssignals, Ermittlung eines Schallsignals, Analyse der Signale mit Hilfe eines Neuronalen Netzes und wobei das System ausgebildet ist, einen Druck; vorzugsweise den Steuerdruck; in Abhängigkeit von der Zeit zu erfassen, um den Schaltvorgang und die Schaltstellung des Ventils zu analysieren.

Erfindungsgemäß wird am Steuerluftanschluss der Pneumatikeinrichtung eines Membranventils ein System zur Zustandsüberwachung eines Membranventils und dessen Pneumatikeinrichtung angeschlossen. Dadurch ist der pneumatische Antrieb, insbesondere mindestens einer Größe, eines Membranventils überwachbar. Die Überwachung durch mindestens einen Sensor bezieht sich auf den Betriebsdruck, den Steuerdruck, der am Ventil wirkenden Kräfte, den Schall und die Schwingungen. Damit werden bei pneumatisch angetriebenen Membranventilen eine Funktionsüberwachung, eine zustandsorientierte Instandhaltung und eine Energieverbrauchsüberwachung ermöglicht. Integraler Bestandteil der Erfindung ist die drahtlose Kommunikation durch das Mittel zum Datenaustausch im Sinne des Internet der Dinge, speziell des industriellen Internet der Dinge, die eine einfache, flächendeckende Installation ermöglicht.

In einer vorteilhaften Ausgestaltung der Erfindung werden die Prozess- und Zustandsgrößen mittels mindestens einem Sensor erfasst. Als Sensoren bieten sich in vorteilhafter Weise Sensoren zur Erfassung von Schwingungen, Schall, insbesondere Druck und/oder Kraft an, die zur Verformung der Membran eingesetzt werden. Diese stellen die wesentlichen Prozess- und Zustandsgrößen in einem Pneumatiksystem dar, aus denen sich Rückschlüsse auf den Zustand des Systems ziehen lassen. Die vorgenannten Messwerte können von jeweils einem Sensor für einen Messwert oder einem gemeinsamen Sensor erfasst werden.

In einer Variante der Erfindung wird der zeitliche Verlauf des Steuerdruck- und/oder des Schall- und/oder des Schwingungssignal ermittelt, um den Schaltvorgang sowie den Stellungszustand des Membranventils zu überwachen. In einer besonders vorteilhaften Variante werden die zeitlichen Verläufe der genannten Signale im Sinne einer fusionierten Auswertung herangezogen, um die Zustände Öffnen und Schließen sowie die stationären Zustände geöffnet und geschlossen zu bestimmen und Abweichungen von sicheren sowie fehlerfreien Zuständen zu erkennen sowie diese anzuzeigen. Dadurch kann beispielsweise auf einen Stellungsrückmelder am Ventil verzichtet werden.

Zur Analyse werden in einem erfindungsgemäßen Neuronalen Netz die zeitlichen Verläufe der Signale analysiert. Dazu ist das Neuronale Netz aus sechs Eingangsdimensionen und sechs Neuronen in der Zwischenschicht, sogenannte Hidden-Neuronen aufgebaut. Dieses Neuronale Netz wurde mit unzähligen Versuchsdaten trainiert und kann auf der Basis aussagekräftiger Merkmale, wie beispielsweise signifikante Fourierkoeffizienten, äußerst zuverlässig sichere von unsicheren Zuständen des Membranventils unterscheiden. Darüber hinaus können beispielsweise aus den zeitlichen Schallverläufen der Durchfluss der Druckluft approximiert werden. Diese Information kann wiederum zur rechnerbasierten Detektion von Druckluftleckagen dienen. In einer besonders vorteilhaften Variante der Erfindung lässt sich diese Zustandsinformation nochmals über eine Durchflussturbine, die der autarken Energieversorgung des Systems zur Zustandsüberwachung von Membranventilen dient, validieren.

Vorteilhafterweise gründet die Analyse der zeitlichen Signalverläufe (Druck, Kraft, Schall, Schwingung, Beschleunigung, etc.) auf den absoluten Differenzen, lokalen Maxima, Zeitdifferenzen und den Beträgen der Signaländerungen. Im Besonderen werden auch periodisch ändernde Signale zur Analyse herangezogen. Bemerkenswerterweise dienen die Schwingungssignale als Funktion der Beschleunigung über der Zeit und/oder als Funktion der Frequenz über der Zeit um den Schaltvorgang sowie auch die Ventilstellung zu analysieren.

In einer besonders vorteilhaften Variante der Erfindung dient die Analyse des zeitlichen Verlaufs des Druck- in Kombination mit dem zeitlichen Verlauf des Schallsignals zur Ermittlung der Schaltzeit des Ventils. Liegt diese wiederum in einem gewissen Zeitbereich, kann dadurch ein sicherer Zustand des Ventils angezeigt werden. Wenn die Schaltzeit außerhalb des Bereichs liegt, kann auf einen unsicheren Ventilzustand hingewiesen werden.

Gemäß der Erfindung lässt sich anhand des zeitlichen Verlaufs der Antriebsgröße Druck und/oder des Kraft-Dehnungsverlaufs, aber auch der Änderungsgeschwindigkeit sowie der Vorzeichen der Änderungsgeschwindigkeit als auch der Zeitdifferenz zwischen Vorzeichenänderungen der Änderungsgeschwindigkeit und auch dem Maximum der Antriebsgröße der Verschleißzustand einer Membran bestimmen. In einer weiteren Ausgestaltung des Verfahrens werden in der Auswerteeinheit und/oder in dem Neuronalen Netz Anomalien gegenüber einem hinterlegten Verhalten erfasst. In der Auswerteeinheit sind Zustände oder Betriebsverläufe mindestens einer Antriebsgröße, insbesondere Druck und/oder Kraft, der Membran hinterlegt beziehungsweise das Neuronale Netz ist mit zu erwarteten Verläufen trainiert. Dies ermöglicht eine konkrete Rückmeldung hinsichtlich des Verschleißzustandes und kann dazu genutzt werden, einen notwendigen Membranwechsel anzuzeigen.

In einer Variante der Erfindung wird aus der Ermittlung des Druckanstiegs während dem Schaltvorgang des Membranventils auf Basis eines Kräftegleichgewichts die Membrankraft modelliert. Vorteilhafterweise könnte auf die separate Kraftmessung verzichtet werden. Anhand der Veränderung des modellierten Kraftverlaufs kann der Membranzustand analysiert werden. Der Setzvorgang aufgrund der plastischen Verformung der Membran im Ventilsitz kann mithilfe der Modellierung nachvollzogen und bei Unterschreiten eines definierten Grenzwertes kann eine Wartungsempfehlung angezeigt werden.

Erfindungsgemäß wird aus der fusionierten Auswertung der Schall-, Schwingungs- und Drucksignale charakteristisch der Antriebstyp des Ventils bestimmt. Dies ist von besonderem Vorteil für die automatische Initialisierung des Systems zur Zustandsüberwachung von Membranventilen, da die Typenbestimmung durch einen ersten Schaltvorgang von alleine ganz ohne das Einwirken des Montagepersonals erfolgt.

In einer Variante der Erfindung ist ein Element zum Anschluss externer Sensoren integriert. Hierdurch könnte ein Temperatursensor am Ventil zur Ermittlung der Medientemperatur angeschlossen werden. Neben der Anzahl der Schaltzyklen ist die Medientemperatur eine entscheidende Zustandsgröße zur Prognose der Membranrestlebensdauer. Mithilfe des Neuronalen Netzes ist somit über die Zustandsüberwachung hinaus eine modellbasierte sowie zustandsorientierte Wartungsempfehlung möglich.

Die Berechnung der Medientemperatur kann aus der Antriebstemperatur mit der Umgebungstemperatur erfolgen.

Durch die Berechnung der Temperatur an Dichtungselementen ist eine Lebensdauervorhersage möglich.

Vorteilhafterweise kann aus der Fusion der Schall- und Schwingungssignale im Falle eines unsicheren Betriebszustandes oder gar Störfalles einen Hinweis auf die Lokalisierung gegeben werden. Während der Schwingungssensor die Schwingungen in unmittelbarer Nähe des Systems zur Zustandsüberwachung aufzeichnet, erkennt der Schallsensor auch entferntere Geräusche. Nach einer gewissen Lernzeit des Neuronalen Netzes kann sehr genau zwischen bekannten, typischen sowie unerwarteten Schallsignalen in der Umgebung unterschieden werden. Durch Abgleich mit dem Schwingungssignal kann der Zustand des überwachten Membranventils und dessen Pneumatikeinrichtung als sicher ausgeschlossen werden. Anhand des integrierten Positionssensors im System zur Zustandsüberwachung kann der Ort der Signalanomalie angezeigt werden.

In einer weiteren Ausgestaltung der Erfindung ist das Mittel zur Datenübertragung ein Funkkommunikationsmittel, insbesondere ein Nahfeldfunkmittel. Die drahtlose Kommunikation ist integraler Bestandteil des Systems zum Betrieb einer Pneumatikeinrichtung. Diese weist sowohl eine Nahfeld-Kommunikation über RFID, Bluetooth LE, Thread, Zigbee oder Ähnlichem auf, als auch eine Fernfeld-Kommunikation über WiFi, LPWan oder Mobilfunk-Standards wie GSM, LTE oder Ähnlichem. Um die Sicherheit der Datenübertragung zu gewährleisten und deren Datenübertragungsrate zu erhöhen, können auch mehrere Technologien kombiniert sein.

Vorteilhafterweise erfolgt die Energieversorgung bei dem Datenerfassungs- und Kommunikationssystem kabellos beispielsweise über eine Versorgungsbatterie. Es ist jedoch auch denkbar, dass die Datenerfassungseinheit die benötigte Energie aus der Funkschnittstelle entnimmt. In einer ganz besonders vorteilhaften Variante der Erfindung kann eine Eigenversorgung des Systems zum Betrieb einer Pneumatikeinrichtung durch "Energy Harvesting" realisiert sein. Eine besonders geeignete Möglichkeit ist die Energiegewinnung aus der beim Schalten des Ventils durchströmenden Druckluft, die eine in das Überwachungssystem integrierte Turbine antreibt und mit einem Generator die Versorgungsenergie für die Elektronik bereitstellt. Eine eingebaute Batterie oder Akku dienen dazu, lange Phasen ohne Energiegewinnung zu überbrücken. Gleichzeitig kann bei dieser Variante die Drehzahl der Turbine als Durchflusssensor genutzt werden.

Erfindungsgemäß wird das integrierte Sensorelement zur Positionsbestimmung genutzt, um in einem Wartungsfall eine genaue Positionsangabe über die kabelungebundene Datenübermittlung abzusetzen. Gerade in komplexen Anlagen der Prozessindustrie sind die zeitaufwändige und somit kostenintensive Ortung der betroffenen Ventilmembran und deren Pneumatikeinrichtung vereinfacht.

In einer Variante der Erfindung ist ein Element zum Anschluss externer Sensoren integriert. Beispielsweise können prozesstechnisch relevante Größen aber auch Zustandsgrößen des Pneumatiksystems über externe Sensoren erfasst werden und über die drahtlose Datenübermittlung des Systems zum Betrieb einer Pneumatikeinrichtung an ein übergeordnetes Analyse- bzw. Prozessleitsystem weitergegeben werden.

Von Vorteil ist das im System integrierte Element zur akustischen und/oder optischen Informationsausgabe. Darüber wird beispielsweise die Funktionalität des Systems signalisiert. Weiterhin kann dadurch Wartungsbedarf angezeigt werden.

Erfindungsgemäß ist das im System integrierte Element zur Informationseingabe für den Initialisierungsprozess verwendbar. Weiterhin ist eine manuelle Betätigung des Membranventils möglich. Darüber hinaus ist das Konfigurieren eines Wartungsprozesses ausführbar.

In einer einfachen Ausführung der Erfindung ist es vorstellbar, dass die Daten- und/oder Energieversorgung kabelgebunden erfolgt.

Die drahtlose Datenübertragung und die kabellose Energieversorgung ermöglichen die einfache, flächendeckende Installation in industriellen Anlagen. Ein Vorteil dieser Erfindung ist der einfache und auch nachträgliche Einbau des Systems zur Zustandsüberwachung von Membranventilen und deren Pneumatikeinrichtungen am Steuerluftanschluss des Antriebs, welcher durch standardisierte Anschlussgewinde unkompliziert ausgeführt werden kann. Das System zur Zustandsüberwachung besitzt zwei pneumatische Anschlüsse, einen Versorgungsanschluss und einen Verbraucheranschluss, wobei es auch mehrere Verbraucheranschlüsse geben kann. In einer Ausführung besitzt das System zur Zustandsüberwachung am Verbraucheranschluss ein Außengewinde, das direkt in einen pneumatischen Antrieb eingeschraubt werden kann.

In einer Ausgestaltung des Verfahrens werden die erfassten Daten in einer Auswerteeinheit ausgewertet und das Auswerteergebnis durch die Mittel zur Datenübertragung an eine zentrale Steuereinheit übertragen. Dies hat den Vorteil, dass die Menge der zu übertragenden Daten reduziert wird.

Durch eine Kombination aus Druck- und Schallsignal zur Auswertung der Ventilstellung kann eine sichere Endlagenrückmeldung gewährleistet werden, die sonst nur durch einen eigenen Wegsensor oder durch zwei Endlagensensoren ermöglicht werden.

Weitere Merkmale und Vorteile der Erfindung ergeben sich aus der Beschreibung von Ausführungsbeispielen anhand von Zeichnungen und aus den Zeichnungen selbst.

Dabei zeigt:
- Figur 1: ein System zur Zustandsüberwachung eines Membranventils und dessen Pneumatikeinrichtung,
- Figur 2: ein Membranventil mit einer Pneumatikeinrichtung und installiertem System zur Zustandsüberwachung.

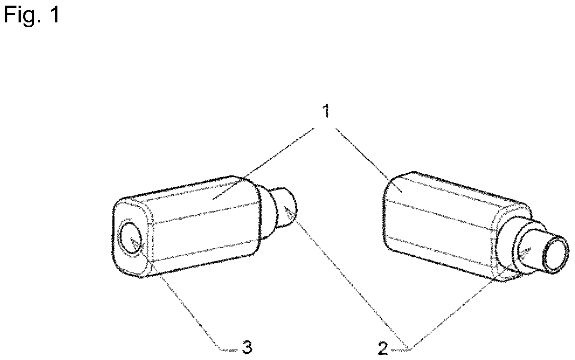

Figur 1 zeigt ein System zur Zustandsüberwachung eines Membranventils 1 zur Ermittlung von Prozess- und/oder Zustandsgrößen, welches mit einer Schnittstelle 2 mit der Pneumatikeinrichtung verbunden ist. Als Prozess- oder Zustandsgrößen sind Druck, Kraft, Position, Schall, Vibrationen, Schwingungen, Durchfluss, Temperatur und Feuchte feststellbar. Das System zur Zustandsüberwachung eines Membranventils und dessen Pneumatikeinrichtung 1 ist hierfür mit einem oder mehreren entsprechenden Mitteln zur Datenerfassung ausgestattet. Weiter ist das System zur Zustandsüberwachung 1 mit einer weiteren Schnittstelle 3 ausgestattet, an die die Steuerluft angeschlossen werden kann. Eine kabelgebundene oder drahtlose Weitergabe der Messdaten an eine weiterverarbeitende Einheit kann über eine nicht dargestellte Schnittstelle erfolgen.

Eine Anzeige kann von einer einfachen digitalen AN/AUS Darstellung bis hin zu vollumfänglichen Messwertangaben inklusive Zeitreihen vorgesehen sein. Wichtiger wird bei diesem System zur Zustandsüberwachung 1 aber eine Weitergabe der Daten an eine übergeordnete Datenverarbeitungseinheit sein. Dazu werden die Daten eventuell noch durch Filter aufbereitet und dann weitergeleitet.

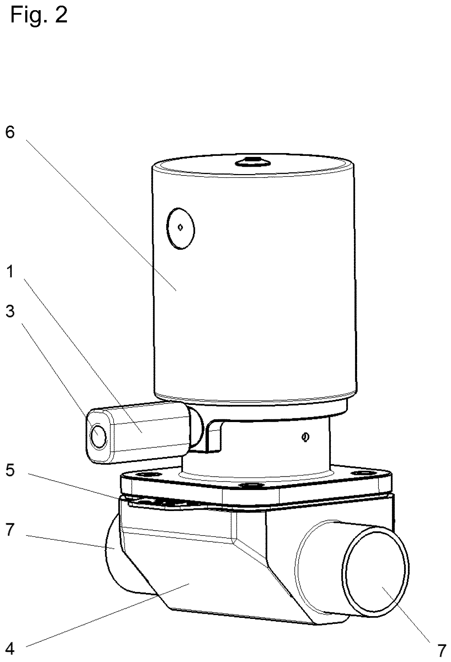

Die Figur 2 zeigt ein Membranventil 4 mit Anschlüssen 7, wobei ein Einlass und ein Auslass vorgesehen sind. Das Membranventil verfügt über eine Membran 5, die mittels einer Pneumatikeinrichtung 6 in Richtung der Antriebsachse bewegt wird. An der Pneumatikeinrichtung 6 ist ein System zur Zustandsüberwachung eines Membranventils und dessen Pneumatikeinrichtung 1 erfindungsgemäß vorgesehen.

## Patentansprüche

1. System zur Zustandsüberwachung von Membranventilen (1) und deren Pneumatikeinrichtung, wobei das System mit einer Schnittstelle (2) mit der Pneumatikeinrichtung verbindbar ist und mit einer weiteren Schnittstelle (3) an die Steuerluft angeschlossen werden kann, wobei das System zur Zustandsüberwachung zwei pneumatische Anschlüsse, einen Versorgungsanschluss und einen Verbraucheranschluss besitzt und wobei das System zur Zustandsüberwachung am Verbraucheranschluss ein Außengewinde besitzt, das direkt in einen pneumatischen Antrieb eingeschraubt werden kann und wobei das System dazu ausgebildet ist, mindestens zwei der folgenden Schritte durchzuführen:
- Ermittlung eines Betriebsdrucks,
- Ermittlung eines Steuerdrucks,
- Ermittlung von wirkenden Kräften in einer Antriebsachse des Ventils,
- Ermittlung eines Schwingungssignals,
- Ermittlung eines Schallsignals,
- Analyse der Signale mit Hilfe eines Neuronalen Netzes.
und wobei das System ausgebildet ist, einen Druck; vorzugsweise den Steuerdruck; in Abhängigkeit von der Zeit zu erfassen, um den Schaltvorgang und die Schaltstellung des Ventils zu analysieren.

2. System nach Anspruch 1, **dadurch gekennzeichnet, dass** das System ausgebildet ist, zur Analyse der Drucksignale Druckdifferenzen, lokale Maxima, Zeitdifferenzen und/oder Beträge der Druckänderung als Kennwerte zu ermitteln.

3. System nach Anspruch 1 oder 2, **dadurch gekennzeichnet, dass** das System ausgebildet ist, im Ventil wirkende Kräfte in Abhängigkeit von der Zeit zu erfassen, um den Schaltvorgang und/oder die Stellung des Ventils zu analysieren.

4. System nach einem der Ansprüche 1 bis 3, **dadurch gekennzeichnet, dass** das System ausgebildet ist, sich periodisch ändernde Größen zu erfassen, um Schaltvorgang und Stellung des Ventils zu analysieren.

5. System nach einem der Ansprüche 1 bis 4, **dadurch gekennzeichnet, dass** das System ausgebildet ist, Schwingungssignale als Funktion Beschleunigung über Zeit und/oder Frequenz über Zeit auszuwerten, um den Schaltvorgang des Ventils zu analysieren.

6. System nach einem der Ansprüche 1 bis 5, **dadurch gekennzeichnet, dass** das System ausgebildet ist, aus Schallsignalen Strömungszustände im Ventil zu ermitteln.

7. System nach einem der Ansprüche 1 bis 6, **dadurch gekennzeichnet, dass** das System ausgebildet ist, Schallsignale zur Druckluft-Leckage-Erkennung zu verwenden.

8. System nach einem der Ansprüche 1 bis 7, **dadurch gekennzeichnet, dass** das System ein neuronales Netz zur Analyse der Signale umfasst, wobei das neuronale Netz vorzugsweise mindestens 4 Eingangs-Dimensionen und mindestens 4 Neuronen in einer Zwischenschicht aufweist.

9. System nach einem der Ansprüche 1 bis 8, **dadurch gekennzeichnet, dass** das System ausgebildet ist, durch eine Kombination einer Drucksignalanalyse mit einer Schallsignalanalyse oder einer Drucksignalanalyse mit einer Schwingungssignalanalyse die Schaltzeit des Ventils zu ermitteln.

10. System nach einem der Ansprüche 1 bis 9, **dadurch gekennzeichnet, dass** das System ausgebildet ist, durch eine Kombination einer Drucksignalanalyse mit einer Schallsignalanalyse oder einer Drucksignalanalyse mit einer Schwingungssignalanalyse der Antriebstyp des Ventils zu identifizieren.

11. System nach einem der Ansprüche 1 bis 10, **dadurch gekennzeichnet, dass** das System ausgebildet ist, Schallsignale zur Detektion von Störfällen zu verwenden.

## Claims

1. System for condition monitoring of diaphragm valves (1) and the pneumatic device thereof, wherein the system can be connected by an interface (2) to the pneumatic device and can be connected by a further interface (3) to the control air, wherein the system for condition monitoring has two pneumatic connections, a supply connection and a consumer connection, and wherein the system for condition monitoring has at the consumer connection an external thread that can be screwed directly into a pneumatic drive, and wherein the system is configured to carry out at least two of the following steps:
- determination of an operating pressure,
- determination of a control pressure,
- determination of acting forces in a drive shaft of the valve,
- determination of a vibration signal,
- determination of an acoustic signal,
- analysis of the signals by means of a neural network,
and wherein the system is configured to detect a pressure, preferably the control pressure, in dependence on time in order to analyse the switching operation and the switching position of the valve.

2. System according to Claim 1, **characterized in that** the system is configured, for analysing the pressure signals, to determine as characteristic values pressure differences, local maxima, time differences and/or magnitudes of the pressure change.

3. System according to Claim 1 or 2, **characterized in that** the system is configured to detect forces acting in the valve in dependence on time in order to analyse the switching operation and/or the position of the valve.

4. System according to one of Claims 1 to 3, **characterized in that** the system is configured to detect periodically changing quantities in order to analyse the switching operation and the position of the valve.

5. System according to one of Claims 1 to 4, **characterized in that** the system is configured to evaluate vibration signals as a function of acceleration over time and/or frequency over time in order to analyse the switching operation of the valve.

6. System according to one of Claims 1 to 5, **characterized in that** the system is configured to determine flow conditions in the valve from acoustic signals.

7. System according to one of Claims 1 to 6, **characterized in that** the system is configured to use acoustic signals for compressed air leakage detection.

8. System according to one of Claims 1 to 7, **characterized in that** the system comprises a neural network for analysing the signals, wherein the neural network preferably has at least 4 input dimensions and at least 4 neurons in an intermediate layer.

9. System according to one of Claims 1 to 8, **characterized in that** the system is configured to determine the switching time of the valve by a combination of a pressure signal analysis with an acoustic signal analysis or a pressure signal analysis with a vibration signal analysis.

10. System according to one of Claims 1 to 9, **characterized in that** the system is configured to identify the drive type of the valve by a combination of a pressure signal analysis with an acoustic signal analysis or a pressure signal analysis with a vibration signal analysis.

11. System according to one of Claims 1 to 10, **characterized in that** the system is configured to use acoustic signals to detect faults.

## Revendications

1. Système de surveillance d'état de soupapes à diaphragme (1) et de leur équipement pneumatique, dans lequel le système peut être relié à l'équipement pneumatique par l'intermédiaire d'une interface (2) et peut être relié à l'air de réglage par l'intermédiaire d'une interface supplémentaire (3), dans lequel le système de surveillance d'état possède deux raccords pneumatiques, un raccord d'alimentation et un raccord de consommateur, et dans lequel le système de surveillance d'état possède au niveau du raccord de consommateur un filet extérieur qui peut être vissé directement dans un dispositif d'entraînement pneumatique, et dans lequel le système est réalisé pour exécuter au moins deux des étapes suivantes consistant à :
- déterminer une pression de fonctionnement,
- déterminer une pression de réglage,
- déterminer des forces actives dans un axe d'entraînement de la soupape,
- déterminer un signal de vibration,
- déterminer un signal acoustique,
- analyser les signaux à l'aide d'un réseau neuronal,
et dans lequel le système est réalisé pour détecter une pression ; de préférence la pression de réglage ; en fonction du temps afin d'analyser l'opération de commutation et la position de commutation de la soupape.

2. Système selon la revendication 1, **caractérisé en ce que** le système est réalisé pour déterminer en tant que valeurs caractéristiques pour l'analyse des signaux de pression des différences de pression, des valeurs maximales locales, des différences de temps et/ou des quantités de la variation de pression.

3. Système selon la revendication 1 ou 2, **caractérisé en ce que** le système est réalisé pour détecter des forces agissant dans la soupape en fonction du temps afin d'analyser l'opération de commutation et/ou la position de la soupape.

4. Système selon l'une quelconque des revendications 1 à 3, **caractérisé en ce que** le système est réalisé pour détecter des grandeurs variant périodiquement afin d'analyser l'opération de commutation et la position de la soupape.

5. Système selon l'une quelconque des revendications 1 à 4, **caractérisé en ce que** le système est réalisé pour évaluer des signaux de vibration en fonction de l'accélération par rapport au temps et/ou de la fréquence par rapport au temps pour analyser l'opération de commutation de la soupape.

6. Système selon l'une quelconque des revendications 1 à 5, **caractérisé en ce que** le système est réalisé pour déterminer des états d'écoulement dans la soupape à partir des signaux acoustiques.

7. Système selon l'une quelconque des revendications 1 à 6, **caractérisé en ce que** le système est réalisé pour utiliser des signaux acoustiques pour détecter des fuites d'air comprimé.

8. Système selon l'une quelconque des revendications 1 à 7, **caractérisé en ce que** le système comprend un réseau neuronal pour analyser les signaux, dans lequel le réseau neuronal présente de préférence au moins 4 dimensions d'entrée et au moins 4 neurones dans une couche intermédiaire.

9. Système selon l'une quelconque des revendications 1 à 8, **caractérisé en ce que** le système est réalisé pour déterminer le temps de commutation de la soupape par une combinaison d'une analyse de signaux de pression avec une analyse de signaux acoustiques ou d'une analyse de signaux de pression avec une analyse de signaux de vibration.

10. Système selon l'une quelconque des revendications 1 à 9, **caractérisé en ce que** le système est réalisé pour identifier le type d'entraînement de la soupape par une combinaison d'une analyse de signaux de pression avec une analyse de signaux acoustiques ou d'une analyse de signaux de pression avec une analyse de signaux de vibration.

11. Système selon l'une quelconque des revendications 1 à 10, **caractérisé en ce que** le système est réalisé pour utiliser des signaux acoustiques pour détecter des pannes.
